Europäisches Patentamt

European Patent Office

Office européen des brevets

(11) Veröffentlichungsnummer: **0 330 869**
**A1**

## (12) EUROPÄISCHE PATENTANMELDUNG

(21) Anmeldenummer: 89102091.9

(22) Anmeldetag: 08.02.89

(51) Int. Cl.4: **C08K 3/22 , C08K 3/04 , B41M 5/26**

(30) Priorität: 18.02.88 DE 3805056

(43) Veröffentlichungstag der Anmeldung:
06.09.89 Patentblatt 89/36

(84) Benannte Vertragsstaaten:
DE ES FR GB IT NL

(71) Anmelder: BAYER AG

D-5090 Leverkusen 1 Bayerwerk(DE)

(72) Erfinder: Foltin, Eckard
Schillerstrasse 31
D-5485 Sinzig-Bodendorf(DE)
Erfinder: Depcik, Hans-Werner
Vennstrasse 124A
D-4000 Düsseldorf 22(DE)
Erfinder: Huff, Karl, Dr.
Moltkestrasse 6
D-4047 Dormagen 1(DE)
Erfinder: Pischtschan, Alfred, Dr.
Zur Eiche 33
D-5067 Kürten(DE)
Erfinder: Yesildag, Mehmet Cengiz
Dahlemer Strasse 7
D-5090 Leverkusen 1(DE)
Erfinder: Erkelenz, Reiner
Wiedenhofgasse 10
D-5000 Köln 80(DE)

(54) Laser-beschriftbares Material.

(57) Kunststoff, enthaltend kleine Mengen Titandioxid und gegebenenfalls Ruß sowie einen die Kriechstromfestigkeit herabsetzenden Zusatz zur Herstellung von laserbeschriftbaren Formkörpern.

EP 0 330 869 A1

## Laser-beschriftbares Material

Aus der europäischen Patentanmeldung 01 90 997 ist bekannt, daß man hochmolekulares organisches Material, d.h. Chemiewerkstoffe oder Kunststoffe, beschriften kann, indem man ihnen einen eine Verfärbung verursachenden Zusatzstoff zufügt und dann einen Formkörper aus dem Material bildmäßig mit einem Laserstrahl behandelt.

Es wurde gefunden, daß man besonders kontrastreiche Bilder, z.B. Schriftzeichen, erhält, wenn der Kunststoff 0,001 bis 2,2 Gew.-% Titandioxid, gegebenenfalls bis 0,1 Gew.-% eines Rußes mit einem mittleren Teilchendurchmesser von 30 bis 120 nm sowie gegebenenfalls einen die Kriechstromfestigkeit oder Lichtbogenbeständigkeit herabsetzenden Zusatz enthält. Im allgemeinen ist die Beschriftung dunkel, z.B. schwarz, und der Formkörper selbst hell gefärbt, z.B. hellgrau.

Gegenstand der Erfindung ist somit ein Chemiewerkstoff, der 0,001 bis 2,2 Gew.-% Titandioxid, gegebenenfalls bis 0,1 Gew.-% eines Rußes mit einem mittleren Teilchendurchmesser von 30 bis 120 nm und gegebenenfalls einen die Kriechstromfestigkeit herabsetzenden Zusatz enthält. Ein weiterer Gegenstand der Erfindung ist die Verwendung dieses Kunststoffs zur Herstellung laserbeschrifteter Formkörper sowie laserbeschriftete Formteile aus diesem Kunststoff.

Erfindungsgemäß geeignete Kunststoffe sind z.B. Polyethylen, Polypropylen, Polyisobutylen, Polystyrol, Polyvinylchlorid, Polyvinylidenchlorid, Polyvinylacetate, Polyacrylnitril, Polyacrylsäure- und Polymethacrylsäureester, Polybutadien (und dessen Copolymerisate), ABS-Kunststoffe, Ethylen/Vinylacetat-Copolymerisate, Polyester, insbesondere hochmolekulare Ester aromatischer Polycarbonsäuren mit polyfunktionellen Alkoholen, z.B. Polyethylenterephthalat und Polybutylenterephthalat oder polyfunktionellen Phenolen, Polyamide, Polyimide, Polyamidimide, Liquid Crystal Polymere, aromatische Polycarbonate, Polyurethane, Polyether wie Polyphenylenoxid, Polyphenylensulfide, Polyacetate, Kondensationsprodukte von Formaldehyd mit Phenolen (Phenoplaste), Kondensationsprodukte von Formaldehyd mit Harnstoff, Thioharnstoff und Melamin (Aminoplaste), Epoxidharze, Polyphenole, Alkydharze und Maleinatharze. Selbstverständlich können auch Mischungen verwendet werden. Besonders bevorzugt sind lineare Polyester, Polystyrol, Polyolefine wie Polyethylen und Polypropylen, ABS, insbesondere Pfropfpolymerisate von Styrol und Acrylnitril auf Polybutadien, Polyamide, aromatische Polycarbonate, Polybutylenterephthalat, Polyethylenterephthalat, Polyphenylensulfid, Polyarylate und Blends aus diesen Werkstoffen. Diese Produkte können auch Flüssigkristall-Struktur besitzen.

Als Ruße kommen insbesondere Flammruße in Frage.

Als die Kriechstromfestigkeit herabsetzende Additive sind insbesondere geeignet z.B. halogenhaltige Verbindungen, Antimonverbindungen (wie Antimontrioxid), Bromverbindungen, Hydroxide, allgemeine Verbindungen von aliphatischer, cycloaliphatischer, aromatischer und aromatisch-aliphatischer Natur (z.B. Tetrabrombisphenol A) oder Glasfasern. Auch Polycarbonate kommen in Frage.

Bevorzugt werden Mengen von 0,01 bis 20 Gew.-%.

Die Additive können den Kunststoffen nach üblichen Verfahren zugefügt werden, z.B. durch Compoundierung in Schnecken-Knetern oder im Buss-Ko-Kneter.

Zur Herstellung laserbeschrifteter Formkörper, z.B. Tasten für Schreibmaschinen, wird zuerst aus den die Additive enthaltenden Kunststoffen das entsprechende Formteil auf übliche Weise hergestellt und dann mit einem Laserstrahl beschriftet. Dies kann z.B. wie folgt geschehen:

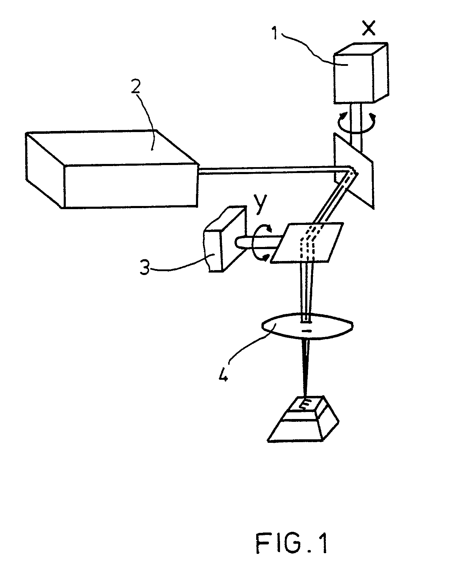

Zur Beschriftung wird der Lichtstrahl eines Nd-YAG-Lasers, mit 1,064 $\mu$m Wellenlänge, genutzt. Den schematischen Ablauf der Laserbeschriftung zeigt die Figur 1. Darin bedeuten (1) Galvanometer, (2) Laserkopf, (3) Galvanometer und (4) Fokussierlinse.

Der Lichtstrahl wird über Ablenkspiegel geführt und beschreibt jede beliebige, zweidimensionale, geometrische Form.

Die erfindungsgemäß erhaltenen beschrifteten Formteile zeichnen sich durch einen besonders guten Kontrast zwischen den unbehandelten und den mit Laserstrahlen behandelten Teilen aus.

Beispiel 1

TiO$_2$ zeichnet sich durch seine hohe Deckkraft zur Einfärbung von hellen Grundtönen aus. Bei der Laserbeschriftung bleibt das Pigment in der beschrifteten Fläche erhalten und verhindert so eine völlige Schwarzfärbung. Mit steigendem TiO$_2$-Anteil nimmt deshalb das Kontrastverhältnis ab. Bei ansteigendem TiO$_2$-Anteil ist außerdem zu beachten, daß die Eindringtiefe der Verfärbung abnimmt und eine geringere Oberflächenveränderung auftritt. Bei dem Beschriftungsvorgang wird dies durch einen heller werdenden Brennfleck sichtbar und akustisch durch ansteigende Lautstärke hörbar.

In dem aufgeführten Beispiel wurde einem ABS-Pfropfpolymerisat (Novodur P2M/natur) TiO$_2$ in unterschiedlichen Anteilen zugegeben.

Definition Kontrastverhältnis:

Zur Bestimmung des Kontrastverhältnisses werden die Hintergrundleuchtdichte (HLD) und die Zeichenleuchtdichte (ZLD) gemessen. Die Leuchtdichte wird in cd/m$^2$ angegeben.

Hierbei ist als Randbedingung eine diffuse Beleuchtung mit einer Beleuchtungsstärke von 500 Lux +/-10 % einzuhalten. Das Kontrastverhältnis wird aus HLD : ZLD gebildet.

| Pigmentierung: | HLD | ZLD | Kontrastverhältnis |
|---|---|---|---|
| Novodur. P2M/nat. | | | |
| + 0,5 % TiO$_2$ | 142 | 22 | 6,5 : 1 |
| + 1 % TiO$_2$ | 148 | 33 | 4,5 : 1 |
| + 1,5 % TiO$_2$ | 157 | 45 | 3,5 : 1 |

TiO$_2$ bewirkt eine deutliche Aufhellung sowohl des Hintergrunds als auch der belaserten Fläche. Mit zunehmenden TiO$_2$-Anteil nimmt das Kontrastverhältnis ab.

Beispiel 2

In diesen Versuchen wurden verschiedene Rußarten hinsichtlich ihrer Effektivität bei der Laserbeschriftung untersucht.

Es wurde eine Farbrezeptur mit 1,0 % TiO$_2$ und jeweils 0,01 % der unten genannten Rußarten in Novodur P2M/natur eingemischt.
- Printex 60
- Flammruß 101
- Black Pearls 900

Die mittleren Teilchengrößen (TG) der Farbruße:

| Printex 60 | : | TG = 21 nm |
|---|---|---|
| Flämmruß 101 | : | TG = 95 nm |
| Black Pearls 900 | : | TG = 15 nm |

Ergebnis:

In dieser Reihe ist der Kontrast bei der Farbmischung mit Flammruß 101 gegenüber den anderen Rußarten deutlich besser, d.h. die erzeugten Schriftzeichen waren wesentlich dunkler.

**Ansprüche**

1. Kunststoff enthaltend 0,001 bis 2,2 Gew.-% TiO$_2$.

2. Kunststoff gemäß Anspruch 1 enthaltend zusätzlich bis 0,1 Gew.-% eines Rußes mit einem mittleren Teilchendurchmesser von 30 bis 120 nm.

3. Kunststoff gemäß Ansprüchen 1 und 2 enthaltend zusätzlich einen die Kriechstromfestigkeit und/oder Lichtbogenbeständigkeit herabsetzenden Zusatz.

4. Verwendung der Kunststoffe gemäß Ansprüchen 1 bis 3 zur Herstellung von laserbeschrifteten Formkörpern.

5. Laserbeschriftete Formkörper aus den Kunststoffen gemäß Ansprüchen 1 bis 3.

FIG.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | BE-A- 664 898 (FIBER INDUSTRIES INC.)<br>* Insgesamt *<br>--- | 1 | C 08 K 3/22<br>C 08 K 3/04<br>B 41 M 5/26 |
| X | PATENT ABSTRACTS OF JAPAN, Band 4, Nr. 101 (C-19)[583], 19. Juli 1980, Seite 50 C 19; & JP-A-55 62 937 (DENKI KAGAKU K.K.) 12-05-1980<br>* Zusammenfassung *<br>--- | 1,2 | |
| A | PATENT ABSTRACTS OF JAPAN, Band 9, Nr. 260 (C-309)[1983], 17. Oktober 1985; & JP-A-60 110 737 (TOYO INK SEISO K.K.) 17-06-1985<br>----- | 1,4 | |

| RECHERCHIERTE SACHGEBIETE (Int. Cl.4) |
|---|
| C 08 K<br>C 08 L<br>B 41 M |

Der vorliegende Recherchenbericht wurde für alle Patentansprüche erstellt

| Recherchenort | Abschlußdatum der Recherche | Prüfer |
|---|---|---|
| DEN HAAG | 14-06-1989 | SCHUELER D.H.H. |

· KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPO FORM 1503 03.82 (P0403)